# EUROPEAN PATENT APPLICATION

(11) **EP 1 229 455 A1**
(43) Date of publication of application: **07.08.2002**
(21) Application number: 00969945.5
(22) Date of filing: 20.10.2000
(51) Int. Cl.: G06F 17/30, G06F 13/00

(54) **INFORMATION PROVIDING SYSTEM**

(30) Priority: 21.10.1999 JP 29895699; 21.03.2000 JP 2000079182; 03.08.2000 WO PCT/JP00/05228
(71) Applicant: Visionarts, Inc., Tokyo 104-0033 (JP)
(72) Inventor: FUJITA, Takeshi, Visionarts, Inc., Chuo-ku, Tokyo 104-0033 (JP); ENDOH, Hitoshi, Visionarts, Inc., Chuo-ku, Tokyo 104-0033 (JP); HATTA, Nariaki, Visionarts, Inc., Chuo-ku, Tokyo 104-0033 (JP); FUJIKAWA, Yasufumi, Visionarts, Inc., Chuo-ku, Tokyo 104-0033 (JP)
(74) Representative: Boyce, Conor
(86) International application number: JP0007326
(87) International publication number: WO0129707

(57) **Abstract**

It is an object of the present invention is to provide information supply system for improving the operability and for allowing more easy accesses to information.

In order to achieve the object, when sending predetermined image data corresponding to information that a server device (20) supplies over a network (10), an identification information adding processing (205) adds identification information such as a pointer indicating information that the server device (20) supplies to the image data. Image data processing (304) of a terminal device (30) extracts the identification information from image data to which identification information to be supplied from a Web browser (303), and information acquiring processing (305) acquires information corresponding to the identification information from the server device (20).

## Description

### INFORMATION SUPPLY SYSTEM AND INFORMATION SUPPLY METHOD, IDENTIFICATION INFORMATION ADDING DEVICE AND COMPUTER READABLE RECORDING MEDIUM ON WHICH IDENTIFICATION INFORMATION ADDING PROGRAM IS RECORDED, INFORMATION SUPPLY DEVICE AND COMPUTER READABLE RECORDING MEDIUM ON WHICH INFORMATION SUPPLY PROGRAM IS RECORDED, AND INFORMATION USING TERMINAL AND COMPUTER READABLE RECORDING MEDIUM ON WHICH INFORMATION USING PROGRAM IS RECORDED

### Technical Field

The present invention relates to an information supply system and so on for supplying information over a network such as the Internet, and more particularly to an information supply system and so on for using identification information to which image data is added in order to improve accesses to information and to enhance the usage of information over a network between different operating systems.

### Background Art

Conventionally, icons in an OS (operating system) using GUI (graphical user interface) has been known as improving operability and so on of files by using images. OS displays an extension at the end of a file name or image data mapped to identification information indicating a file type such as a resource in the file in advance so that the icons allows easier identification of the file type.

In the OS using such icons, icons are used to allow instruction for processing such as file manipulation and so on. For example, a user may manipulate a pointing device in order to perform file manipulations such as copying, moving, deleting files by drag-and-drop operations. Alternatively, a corresponding icon may be so-called double-clicked so that an application program mapped to each file type can start up and a file corresponding to the double-clicked icon automatically.

By the way, conventionally, as one for sharing a file between a plurality of information processing apparatuses connected to a network, methods such as the so-called network file system (NFS) has been known.

In the file sharing by using such a NFS, some OS's allow performing access limitation for each terminal device, for each user, for each collection of users or for each file or for each directory.

Alternatively, a method whereby file sharing is performed by using WWW (World Wide Web) services provided by an HTTP (Hyper Text Transfer Protocol) server is also known.

In the file sharing by using such a HTTP server, the HTTP server allows limitation of accesses to an HTML file, a predetermined file, or a predetermined directory.

By the way, in the above-described OS using icons, icons are often specified by corresponding to file types only. Therefore, manipulations on icons are limited to processing specified by the OS in advance depending of file types.

Thus, when the setting by the OS is different, or they are handled by a different OS, an operation intended by file creator is not always performed. Further, it does not always operate as desired by the user.

Furthermore, in the above-descried OS using icons, since displayed icons directory correspond to real files, file manipulations for providing instructions to icons involves manipulations to real files. Therefore, deletion is instructed by a wrong manipulation, the file is really deleted. Thus, special cares are needed for handling, and access limitations and so on for files are required as necessary.

In addition, in the above-described file sharing using the NFS, relatively complex setting is needed at the side of a user of the file because a specific directory at the side of the file supplier is mounted on a specific directory of a terminal device.

Still further, also at the side of file supplier, a user must set for each terminal device or user, or for each file or directory to be shared from the security point of view.

Additionally, in the above-described file sharing using the HTTP server, when accesses are limited, for example, manipulations are required such as changing the setting of the HTTP server and changing access limitation by the OS of the information processing apparatus on which the HTTP server is executed. Since these manipulations need knowledge on operations of the HTTP server, HTML specifications and so on, there is a room for the improvement of operability.

The present invention was made in view of the above-described problems, and it is an object of the present invention to provide an information supply system and so on for improving the operability and for allowing easier accesses to information.

### Disclosure of Invention

The present invention is characterized in creating identification information inherent to information that an information supply device supplies, adding the created identification information to predetermined image data to be supplied to a terminal, and recording a corresponding relationship between identification information and information that the information supply device supplies.

Furthermore, the present invention is characterised in adding, to the predetermined image data, operational instruction identification for each OS type of the terminal to which the information is supplied.

The identification information inherent to information the information supply device supplies may include an address of a corresponding information such as URL as well as information which allows identification of each information such as numbers, codes, and so on.

Further, the information supply device may include application software such as an HTTP server, a file server and so on operating on a generic OS as well as processing built in a specific OS or a unit such as specific software.

In addition, the terminal may include HTTP software and so on operating on a generic OS as well as processing built in a specific OS or a unit such as specific software.

Also, a unit or processing for creating identification information inherent to a traded subject may include an extension program of the HTTP server as well as independent software for monitoring and controlling accesses to the image file, or a unit such as hardware having the same function.

Still further, a unit or processing for recording a corresponding relationship between identification information and information that the information supply server supplies may include software operating independently within the information supply device as well as a unit such as a log function of the HTTP server, or a unit such as software operating outside of the information supply device.

### Brief Description of Drawings

Fig. 1 is a block diagram of a configuration of information supply system according to one embodiment of the present invention;
Fig. 2 is a concept diagram showing an outline of functions achieved by operations of a server device and a terminal device constructing the above-described information supply system;
Fig. 3 is a diagram showing one example of a catalog displayed on a display device of the terminal device constructing the above-described information supply system;
Fig. 4 is a diagram showing one example of a table (creation log) recorded by a database of the above-described server device;
Fig. 5 is a diagram showing one example of an image displayed on a display device of the above-described terminal device;
Fig. 6 is a diagram showing one example of a table, (update log) recorded by the database of the above-described server device;
Fig. 7 is a structure diagram of an information image file showing a storage construction of image related information;
Fig. 8 shows one example of the image related information;
Fig. 9 is an explanatory diagram of an access to a pointer through menu selection;
Fig. 10 is an explanatory diagram of telop display processing;
Fig. 11 is an explanatory diagram of information image addition through a drag and drop action from a menu;
Fig. 12 is an explanatory diagram of an embodiment in which a view of a first managing area and a view of a second managing area are switched through tab selection;
Fig. 13 is an explanatory diagram of an embodiment in which the view of the first managing area and the view of the second managing area are separated by frames in order to display them simultaneously; and
Fig. 14 is an explanatory diagram of an embodiment in which the second managing area (HTML) is displayed after updated and a new information image file is managed when the image file is accesses in the first managing area (HTML).

### Best Mode for Carrying Out the Invention

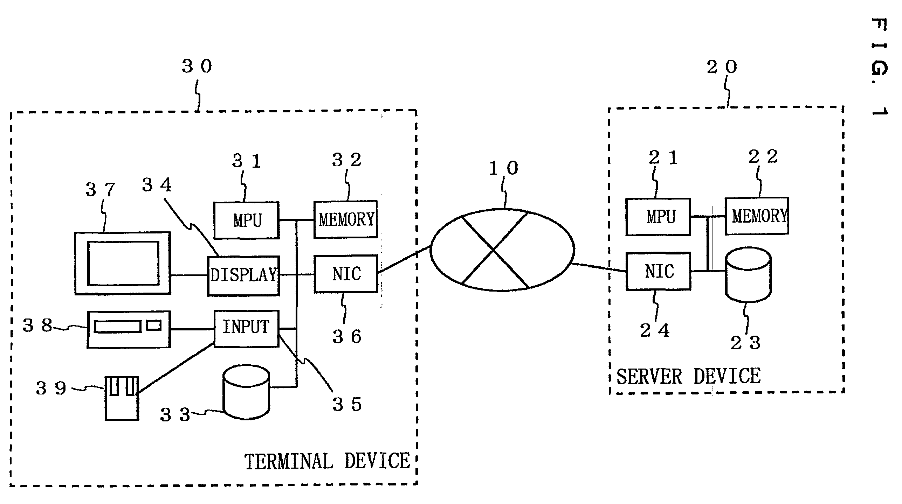

Fig. 1 is a block diagram showing a configuration of an information supply system according to one embodiment of the present invention.

The information supply system has a server device 20 connected over a network 10 such as Internet and a terminal device 30 for using information supplied by the server device 20. While Fig. 1 includes one server device 20 connected to the network 10 and one terminal device 30 for convenience, any particular limitation is not inposed for the number of the server device 20 and the terminal device 30.

The server device 20 includes a microprocessor (MPU) 21, a memory 22, a hard disk drive device (HDD) 23 in which an operating system (OS), software such as HTTP server, text data, and image data is stored, and a network interface 24 for example.

Further, the terminal device 30 includes a microprocessor (MPU) 31, a memory 32, an operating system (OS), an HDD 33 in which HTTP viewer software (web browser), for example, is stored, a display interface 34, an input interface 35, and a network interface (NIC) 36.

A display device 37 is connected to the display interface 34, and an operation screen for the OS, display screen for the web browser, and so on are displayed thereon. Further, a keyboard 38 and a pointing device 39 such as a mouse are connected to the input interface 35, and instructions from a user, for example, is input thereto through those peripheral devices.

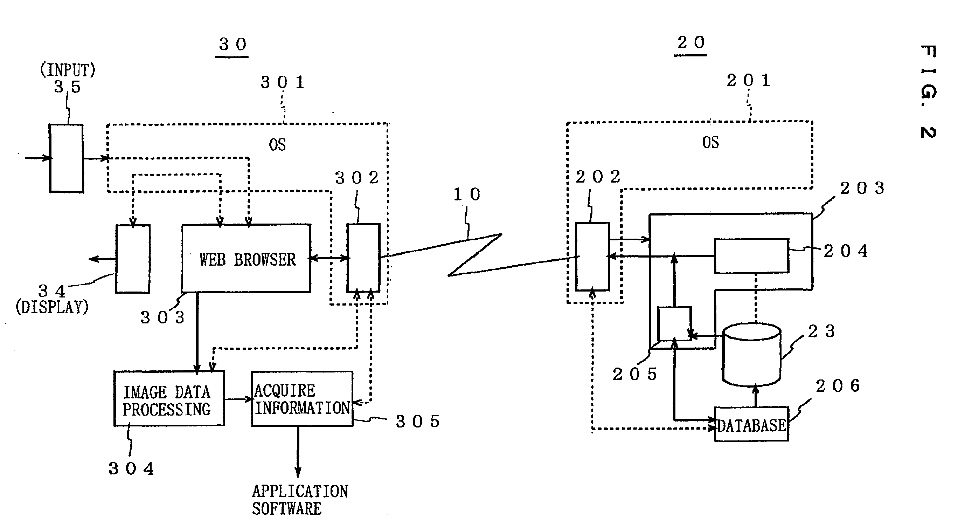

Fig. 2 is a concept diagram showing an outline of function blocks of server device 20 and the terminal device 30.

In the server device 20, control of the entire device, communication control processing 202 for distributing communication processing to predetermined services such as Telnet, FTP, and HTTP based on port information, for example, and processing of an HTTP server 203, for example are executed in parallel under the control of an OS 201.

The HTTP server 203 shows information (specific file, directory and so on) supplied to a user as image data (catalog image) referenced from a predetermined HTML file (catalog) defined for each information supply unit such as a user, a group, a file, a directory and so on. By showing a catalog as an HTML file, when the image data referenced in the HTML file is defined as necessary, a plurality of image data on an arbitrary directory can be shown to the used as one single catalog.

Further, in image data for each catalog image, images of information of one or several files, directories, and so on showing information actually supplied to the user can be included. In this case, the identification information, which is described later, corresponding to each information may be added to image data in advance.

Further, by showing the information supplied to a user as a catalog using an HTML file, when a description of reference to image data in the HTML file is changed as necessary, a unit of information supply can be changed thereby. Thus, a unit of information supply can be changed easily. In this case, in terms of the security improvement, it is desirable that access limitation for actually supplied information is changed depending on the change of the unit of information supply.

In addition, by limiting accessible users for each unit of information supply determined by a catalog, used who can access to the catalog can be limited, which can realize file sharing for permitting specific user to access corresponding to a specific file. When user who can access to the catalog are changed as necessary, members of the sharing group can be changed thereby. In addition, when a catalog image included in the catalog is changed as necessary, shared information can be changed. By these settings, setting for sharing can be changed dynamically.

Notably, in order to show, to a user, information that the server supplies, the user only needs to be able to view image data to which identification information is added. Thus, a measure therefor does not have to be a catalog realized by descriptions in the above-described HTML file. For example, it may be changed as necessary to a measure whereby a file of image data to which identification information is added is simply stored in a specific directory or the like in advance so that image data can be sequentially viewed for checking.

Furthermore, identification information corresponding to a file of information that the server device 20 actually supplied is added to the image data of the above-described catalog image. As the identification information for indicating an address such as a URL (pointer) can be used. Notably, in order to identify information that the server device 20 actually supplies, only information corresponding to the identification information in the image data must be identified. Therefore, as the identification information, instead of the above-described pointer, an inherent number, code, and the other identification information added to each information that the server device 20 supplied can be used.

In addition, identification information inherent to accesses from the user (access identification information) is added to the image data of the catalog image.

Still further, identification information such as operational instruction and so on for each type of OS (operational instruction identification information) executed in the terminal device 30 may be added to the image data of the catalog image. By adding such operational instruction identification information in advance, an operation for each type of OS can be instructed, which facilitates sharing the same information corresponding to the image data among a plurality of OS's.

According to this information supply system, executed in the server device 20 are identification information adding processing 205 for adding identification information including the above-described pointer, the access identification information, operational instruction identification information and so on to specific image data that the HTTP server 203 sends, and processing for database 206 for recording each identification information in advance and for managing a table showing correspondences among these identification information, image data to which identification information is added, and information on files, directories and so on that the server device 20 actually supplied (supplied information).

Notably, the management of tables showing correspondences of identification information, image data to which identification information is added, supplied information and so on does not have to be performed through the processing of the database 206 and so on executed in the server device 20 for supplying information to users but may be performed through processing executed in any other device.

Still further, the image data to which the identification information adding processing 205 add identification information may not be limited to the image data of the above-described catalog image. Alternatively, only access identification information may be added to image data except for catalog images. When the access identification information is added to the image data in advance, information corresponding to an access can be acquired by referring to the database 206 thereby. Thus, based on that, identification of a path for acquiring image data, for example, can be performed more easily.

On the other hand, also in the terminal device 30, control of the entire device, communication control processing 302, input control from a user, processing of an Web browser 303, image data processing 304 for extracting, for example, identification information from image data to which the identification information is added as described above, information acquiring processing 305 for acquiring information form the server device 20 based on the identification information and for supplying application software such as word processor and spreadsheet are executed in parallel under the control of an OS 301.

An outline of general operations of the Web browser 303 and the HTTP server 203 will be described below.

When a user manipulates the terminal device 30 through the input interface 35 and inputs an intended address (Uniform Resource Locator: URL, having a portion specifying a host name of a server in which the HTTP server is implemented and a portion specifying a file name), the Web browser 303 sends a connection request including a file name to the server device 20 corresponding to a host name. The connection request is supplied to the intended server device 20 over the network 10 and supplied to the HTTP server 203 through the communication control processing 202.

When the connection request is supplied, the HTTP server 203 reads out data corresponding to the file name in the connection request from the HDD 23 and sends it to the terminal device 30.

A URL instructed first by the user sometimes indicates a host name only or a host name and a particular directory only, and in such a case, a file having a standard name (index.html) in a root directory of a corresponding host or an indicated directory is read out first and then sent to the terminal device 30.

In such a file having a standard name or a file instructed by a user, links to a view of text, a view of an image, and other files, for example, are described according to the HTML (Hyper Text Markup Language).

The file from the HTTP server 203 is supplied to the Web browser 303 through the network 10 and the communication control processing 302 of the terminal device 30. The Web browser 303 creates a display image data in accordance with the description of the file and supplies it to the OS 301. The OS 301 deals the display image data from the Web browser 303 as an image in a window to be assigned to the Web browser and display it on a display screen of the display device 37 through the display interface 34.

Here, in the file supplied from the HTTP server 203, for example, when displaying an image along with a file name of image data is instructed, the Web browser 303 requests the HTTP server 203 to transmit image data corresponding to the file name.

When the transmission request is accepted, the HTTP server 203 reads out image data having a requested file name from the HDD 23 and transmits it to the web browser 303.

When the image data is received, the Web browser 303 deals the image data as image data in a predetermined location in the above-described image data and supplies it to the OS 301.

Thus, an image based on the received image data is displayed in a predetermined location in a window of the Web browser 303.

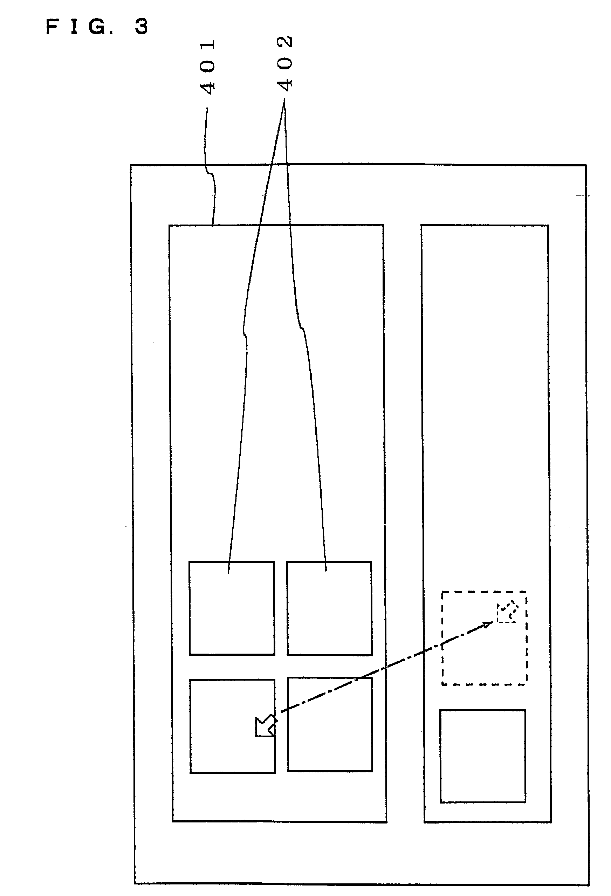

If the address indicated by a user corresponds to a catalog by the above-described HTML file, the catalog including a plurality of catalog images 402 is displayed within the Web browser 303, as shown in Fig. 3.

The identification information adding processing 205 is implemented as an extension program (so-called plug-in) of the HTTP server 203, for example. When file transmission processing 204 within the HTTP server 203 reads out and sends a file of the particular image data from the HDD 23, the identification information adding processing 205 adds identification information such as the above-described pointer, access identification information, and operational instruction identification information.

By the way, since the access identification information is enough if it is information inherent to each access, it can be created based on information such as an IP address of the terminal device 30 operated by a user and access date and time to the server. Alternatively, access identification information may be created by also using the inherent identification information given to every user or every terminal device 30 for the image data processing 304 as described below.

Conversely, access date and time themselves may be used as identification information. Since two or more accesses to one server device 20 are not processed simultaneously in general, only access date and time are enough for defining each access. Therefore, each image data can be identified even when access date and time are added to the image data as access identification information.

Further, as a function of the HTTP server, a function for recording a log of accesses from a user is implemented, and it is possible to record an IP address of the terminal device 30 of a user using the HTTP server, access date and time, and so on in the access log. Thus, when access date and time are used as identification information, the access log is referenced so that an IP address can be obtained which corresponds to the access date and time added to the image data. Therefore, the IP address of a user accessing to the image data can be identified easily.

Notably, only identification information such as the above-described pointer must be added in order to identify each information that the server device 20 supplies. Thus, the access identification information does not have to be added. However, the addition of access identification information facilitates identification of each access and then identification of an IP address, the above-described client ID, and so on of the terminal device 30 manipulated by a user. Therefore, it is desirable from the viewpoint of the improvement of the security and safety of the transaction.

Further, since addition of identification information is enough if it is performed to allow identification of image data (image file), it may be added to a vacant area defined on an image file format, for example, or may be embedded in image data by using so-called electronic watermark technology which diffuses and adds it into the image data, or may be added in front or rear of a body of the image data on the image format. Furthermore, identification information may be added as it is so as to suppress processing loads, or may be added after processing of proper encoding and encryption for improving security, for example.

The image data to which identification information is added is handled similarly to general image data on the file transmission processing 204 and the communication control processing 202 and is sent to the Web browser 303 of the terminal device 30.

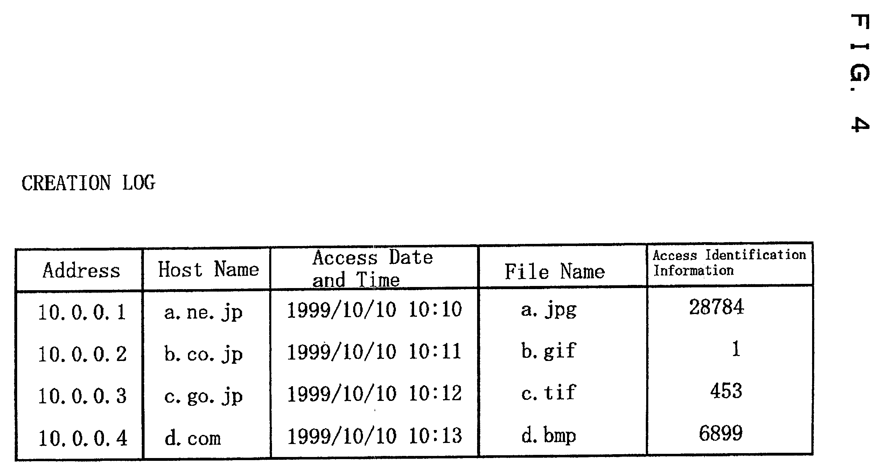

By the way, the database 206 obtains information indicating conditions of user access through the OS 201 and the HTTP server 203, for example, creates a table (creation log) showing a corresponding relationship between access identification information added by the identification information adding processing 205 and information indicating user access conditions, and records it on HDD 23. The creation log includes, as shown in Fig. 4, for example, an accessing IP address, a host name of the server device 20 in which the HTTP server 203 operates, access date and time, a file name of image data, and access identification information added by the identification information adding processing 205.

Thus, by referring to the creation log (or update log described below), access identification information to which image data is added, an accessing IP address, information indicating user access conditions such as access date and time can be obtained. Therefore, researches of user access conditions and so on can be performed relatively easily.

In Fig. 2, while an example where the identification information adding processing 205 is implemented as an extension program of the HTTP server 203 is shown, it can be implemented as processing for placing an image file, for example, in a file server independent from the HTTP server in advance, monitoring an access to the file server, and sending out image data to which identification information such as a pointer, access identification information, operational instruction identification information and so on are added when an access request is received for a particular image file because it is enough if it has a function to add, to the particular image data, the above-described identification information such as a pointer, access identification information, operational instruction identification information, and so on.

In this case, the HTTP server and the file server, for example, are not necessary to be implemented as separate devices, but they may be executed as a plurality of server programs and identification information adding processing, for example, on a single OS. Alternatively, it is possible, by using a so-called emulator, to execute a plurality of OSs on a single device, execute processing as HTTP server on one OS, and execute processing as file server, for example on another OS. Thus, equivalent processing can be executed with a plurality of devices though they are physically one device.

By separating the HTTP server and the file server, for example, in this way, an access right, for example, can be set in the HTTP server and the file server, for example, separately, which increases flexibility for setting security, for example. Therefore, it can contribute to the improvement of security.

In addition, information must be supplied to terminal device 30 only. Therefore, information may be supplied to a terminal device 30 by using an FTP server, mere a file server such as an SMB server or a unique application instead of the HTTP server.

The image data processing 304 performs processing corresponding to identification information when the image data to which the identification information is supplied from the Web browser 303. This processing includes management for saving, deleting, and updating, for example, image data based on identification information added to the image file, for example, and further includes processing for instructing acquisition of actual information corresponding to the image data, processing for performing manipulation such as viewing and editing on the real information corresponding to the image data, and so on.

A detail of each processing will be described below.

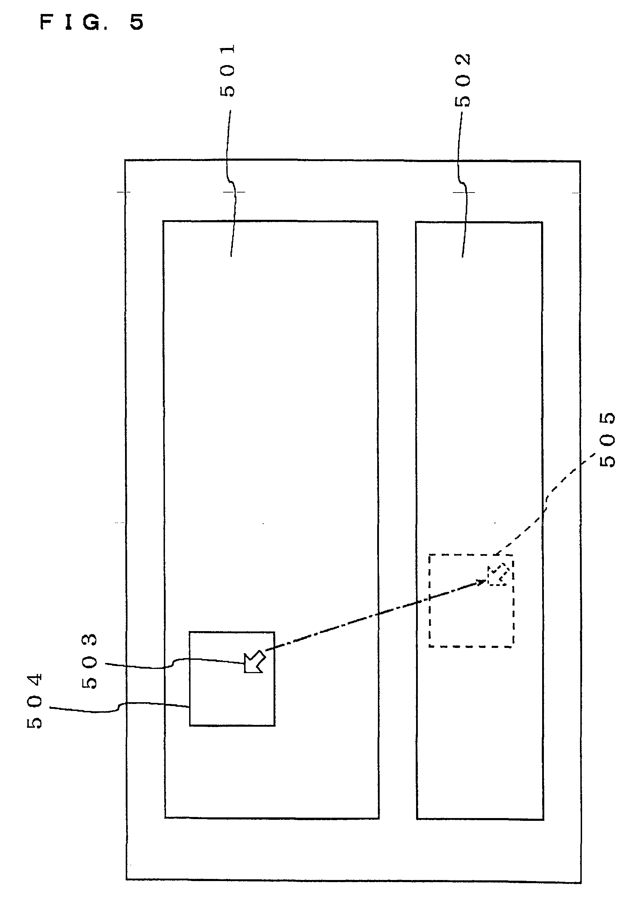

As shown in an example of display screen of a display device 37 in Fig. 5, a window 501 as well as a window 502 of the Web browser 303 are assigned to the image data processing 304 by the above-described OS 301.

Image data can be supplied from the Web browser 303 to the image data processing 304 under the control of the OS 301 by a so-called drag and drop operation.

That is, image data is supplied from the Web browser 303 to the image data processing 304 through the OS 301 by operating a pointing device 39 by a user, matching a pointer 503 to a displayed position of an image 504 displayed within the Window 501 of the Web browser 303, under a condition where a button, for example, of the pointing device is manipulated, moving the pointer 503 onto the window 502 of the image data processing 304, and releasing the operation of the button of the pointing device 39.

When image data is supplied, the image data processing 304 displays an image 505 corresponding to the supplied image data at a position of the pointer 503.

The image data is stored by the image data processing 304 at a predetermined area of the HDD 33 through the OS 301 when the image data is supplied through the above-described drag and drop operation.

Here, when the image data passed to the image data processing 304 is image data of the above-described catalog image, image data to which identification information such as a pointer is simply added is only passed. Then, accesses are not performed to an entity of information that the server device 20 supplies. Therefore, traffic does not occur for supplying to the terminal device 30 information that the server device 20 supplies until acquisition, manipulation and so on for information are instructed, which contributes to the reduction of traffic.

Further, image data is deleted by deleting image data selected by an instruction from a user from the predetermined area of the HDD 33. In this case, even when image data of the catalog image is deleted, only the image data is deleted, and an entity of information that the server device 20 supplies is not directly manipulated and therefore is not deleted.

Accordingly, the possibility for deleting the entity of a file by a mistake on manipulation, for example, can be reduced, which can contribute to the improvement of security and easier handling.

Image data is updated in order to update stored image data to latest one at that time. The update processing may be executed in accordance with an instruction from a user, for example, or may be executed based on information such as creation date recorded in a file of image data. Further, it may be executed automatically for every predetermined interval.

When the update processing is started, the image data processing 304 extracts identification information added to image data to be updated and sends it to the HTTP server 203 and the database 206 the identification information and file name, for example, in order to request update of the image data.

The update request is supplied to the HTTP server 203, and the database 206 as a packet of a predetermined port through communication control processing 302, the network 10, and the communication control processing 202.

When updating, the image data processing 304 may send entire image data, and the HTTP server 203 or the database 206 may extract identification information form the obtained image data.

Further, during the update, the image corresponding to image data being updated by the image data processing 304 may be indication of updating. Thus, users can easily realize image data being updated.

By the way, inherent identification information (client ID) is given to the image data processing 304 for every user or for every terminal device 30. The client ID is supplied to the HTTP server 203 and the database 206 as a packet of a predetermined port through the communication control processing 302, the network 10 and the communication control processing 202 when image data is updated, for example.

When update of image data is instructed, the file transmission processing 204 of the HTTP server 203 instructs the HDD 23 to read out image data corresponding to a file name being requested update.

Here, the identification information adding processing 205 creates new access identification information corresponding to a user access condition and adds it to image data. Further, identification information adding processing 205 checks whether or not identification information such as a pointer or the above-described operational instruction identification information is updated, and, if these identification information is updated, adds new identification information to the image data.

Thus, image data to which the new identification image is added is supplied to the image data processing 304 of the terminal device 30 through a predetermined port and the image data is updated.

On the other hand, the database 206 obtains information indicating a user access condition through OS 201 and the HTTP server 203, for example, creates a table showing a corresponding relationship between identification information added by the identification information adding processing 205 adds newly and information indicating a user access condition (update log), and records it on the HDD 23 separately from the above-described creation log.

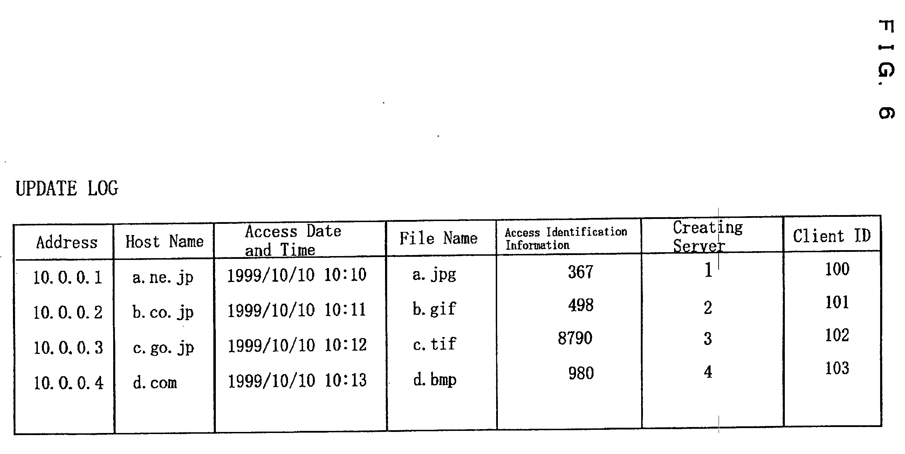

Like the creation log, as shown in Fig. 6, the update log includes an accessing IP address, a host name of the server device 20 to which identification information is added newly, access date and time (update date and time), a file name of image data, identification information added by the identification information adding processing 205 as well as information for identifying the server device 20 having created original identification information (creating server ID) and a client ID for identifying the terminal device 30 used by a user or the user.

By referring to this update log, information for identifying a user or the terminal device 30 corresponding to the identification information added to image data can be obtained so that a path for obtaining image data, for example, can be specified more accurately.

Further, when information corresponding to image data is acquired, the image data processing 304 extracts, based on an instruction from a user, identification information such as a pointer from image data to which identification information is added and instructs the information acquiring processing 305 based on the extracted identification information to acquire information corresponding to the image data from the server device 20. Thus, the information acquiring processing 305 requests the server device 20 information corresponding to the pointer or the like through the communication control processing 302, for example, in order to acquire information supplied from the server device 20 in response thereto.

Further, during the time for acquiring, from the server device 20, intended information, the image data processing 304 may display that the information is being acquired by using a display such as "now loading". Alternatively, if the intended information cannot be acquired immediately because it is being used by another user, or it is being updated, the image data processing 304 may display it.

By performing these displays, the user can realize conditions easily, which contributes to removal of anxiety.

In addition, when manipulation such as viewing and editing is performed on real information corresponding to image data, information acquired by the information acquiring processing 305 in the same manner as above is supplied to a word processor, application software such as for spreadsheets. Thus, the application software can perform manipulation such as editing on the supplied information.

When the manipulation such as viewing and editing by the application software ends, the acquiring processing 305 determines whether or not any changes are needed for an entity of the information, and sends the information to the server device 30, if needed.

Still further, during the time when editing is performed on the entity of the information, the server device 20 can limit accesses to the information to be edited. Thus, it can prevent the information to be edited from being edited by other users. Here, also in a terminal devices used by the other users, the same indication as above may be displayed so that the other users can realize that the information is being used.

In the above-described Fig. 2, while an example is shown where the image data processing 304 and the information acquiring mean 305 are implemented as processing independent from the Web browser 303, it can be implemented as an extension program of the Web browser 303 (so-called plug-in) because it is enough if it has a function to acquire an entity of the information corresponding to the image data.

Furthermore, the present invention is not limited to the above-described embodiment, and the construction and the implementation method can be changed properly within the scope of the technological spirit of the present invention.

For example, in the description above, while an example that identification information such as a pointer directly indicating information that the server device 20 supplies is added to image data of a catalog image, only information corresponding to the image data needs to be identified. Therefore, identification information inherent to a pointer, for example, may be added to the image data in order to manage a corresponding relationship with a pointer, for example, corresponding to the identification information by the database 206, for example.

Further, in the above-described embodiment, as a measure for supplying, to the terminal device 30, specific image data to which identification information is added, while an example that a network also used for providing information corresponding to the image data is used is shown, the method for supplying the image data is not especially limited. It may be supplied through any other network, public network and so on.

Alternatively, image data to which identification information is added may be supplied to a terminal device by using a recording medium such as a flexible disk, an optical disk, and so on in order to acquire information corresponding to the image data via a network by using identification information that the terminal device has extracted from the image data.

In this case, the processing for creating image data to which identification information is added only needs to indicate a corresponding relationship between identification information and information that the server device supplies. Therefore, it is not limited to identification information adding processing and processing for a database, for example, executed in the server device.

Thus, information processing device which is not connected to a network, for example, may be used to add identification information such as a pointer to predetermined image data and to supply, to a database, for example, information indicating a corresponding relationship between the identification information and information that the server device supplies through a recording medium such as a flexible disk, an optical disk and so on.

The above-described embodiment will be described further in detail below.

### [Structure of Image File]

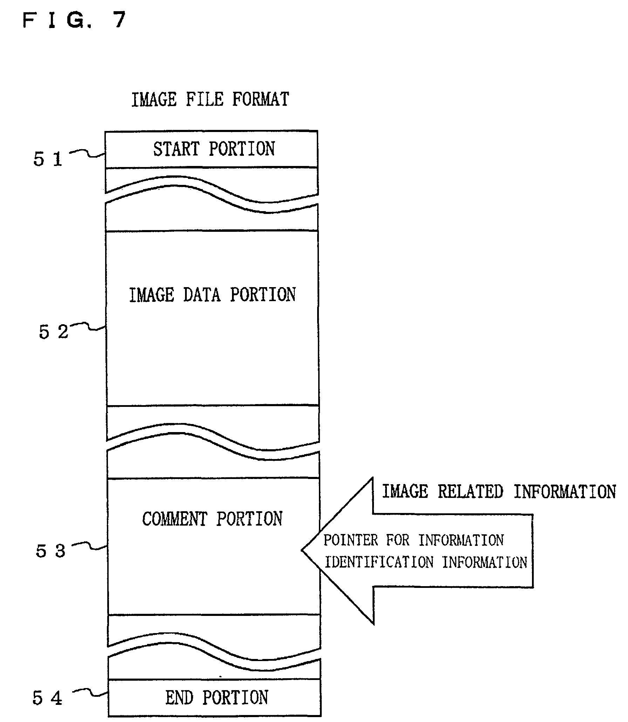

Fig. 7 is one example of a data structure of image file handled in the above-described embodiment. The image file shown in Fig. 7 includes a start portion 51 indicating the beginning of a data stream, an image data portion 52 for describing displayed data of an image, a comment portion 53 for describing information which is not influence on a view of an image, and an end portion 54 indicating an end of the data stream. For example, a JPEG file and GIF file adopt such a data structure. Identification information which is added to the above-described image data and/or pointer information such as a URL can be described in the comment portion 53 as information which does not influence on a view of the image. Further, even if it is in another image format, it can be described in a corresponding area if it is in a format having an area for information which does not influence on the view of the image. Further more, in the data stream of the image file, identification information inherent to the image file, pointer for one or a plurality of pieces of information, an index for a menu item corresponding to the image file, and/or an entity of a program can be written in an area which is ignored when the image is displayed. Also, as described above, they can be added to image data by using a digital watermark technology.

In the description below, identification information added to image data, pointer information and the like are referred to "image related information". Further, an image file in which image related information is added to image data is referred to "information image file".

### [Structure of Image Related Information]

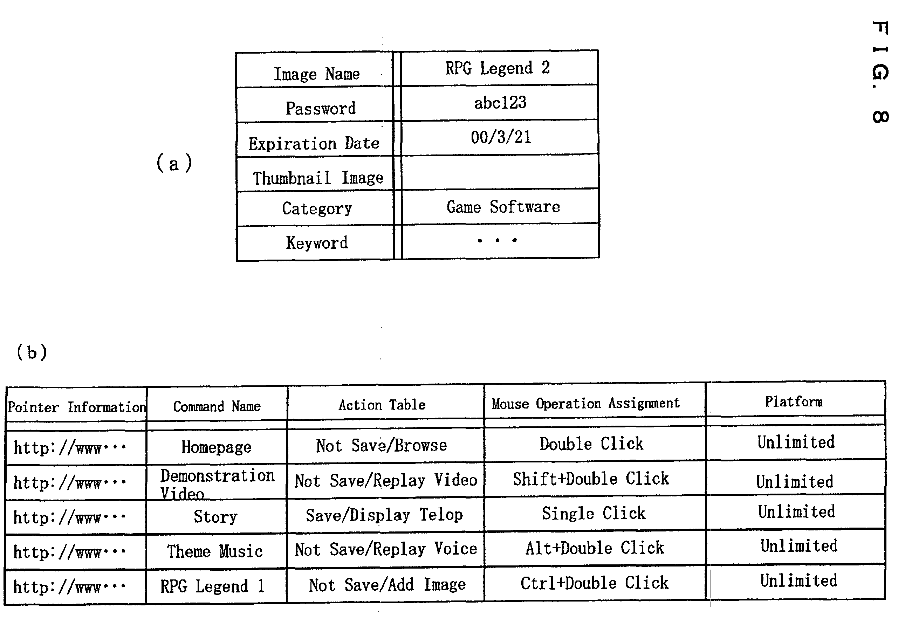

Fig. 8 is a structure diagram of image related information. The image related information shown in Fig. 8(a) includes information of an image name, a password, an expiration date, a thumbnail image, category, and keyword.

The "image name" is a name of an image which is thumbnail-displayed on the window 502 of the image data processing 304. The "password" is a password which requires a user to input when an information image file is supplied to the image data processing 304. Only users who know the password can register the information image file in the image data processing 304. The "expiration date" is an expiration date of the information image file supplied to the image data processing 304, and the information image file is removed from a recorded area of the HDD 33 after the expiration of the period. The "thumbnail image" is data of an image file which is replaced with an image displayed on a browser and thumb-nail displayed on a window of the image data processing 304 when the information image file displayed on the browser is supplied to the window of the image data processing 304. The "category" is data for specifying a folder in which information image file is stored when the information image file is supplied to the image data processing 304. The image data processing 304 creates newly a folder having a specified name when a specified folder does not exist. The "keyword" is a word which is used as a search key when information image file having been supplied by the image data processing 304 is searched.

The image related information shown in Fig. 8(b) is constructed by assigning a command name, an action table, and a mouse (pointing device) operation to each pointer information and associates them with a platform as one set.

The "pointer information" indicates a location of a file on a local computer or over a network. For example, the pointer information includes a file name, a path name indicating a location of resources on the local computer, Universal Naming Convention(UNC) indicating a location of resources in a network environment, Uniform Resource Locator (URL) indicating a location of resources on Internet or Intranet, or Uniform Resource Identifiers (URIs). The "command name" is a view name used when displaying a content of a pointer on a menu. For example, it is "Access To Homepage". Here, the "menu" is a menu which is displayed and can be selected therefrom on a display unit 37 when a right button of the mouse 39 is clicked. The "action table" indicates operations of the image data processing 304. A content of a specified operation includes whether or not a file indicated by pointer information added to the information image file is stored in the HDD (storage unit) 33 of the terminal device 30 when the information image file is supplied to the image data processing 304, whether or not the file is automatically executed, and a method for executing the file (telop display, video replay, voice replay, and so on). The "assigning mouse operation" sets a mouse operation for accessing pointer information. Types of setting includes double click, Shift+double click, Ctrl+ double click, Alt + double click, and so on. The "platform" specifies an environment (platform, OS) matching with a file indicated by pointer information. For example, when the OS 301 is Windows (Trademark), the image data processing 304 selects a pointer for information corresponding to Windows and displays it on the above-described menu.

### [Access to Pointer Information]

A method for accessing a pointer recorded in an information image file in the terminal device 30 will be described.

### (1) Method through Menu Selection

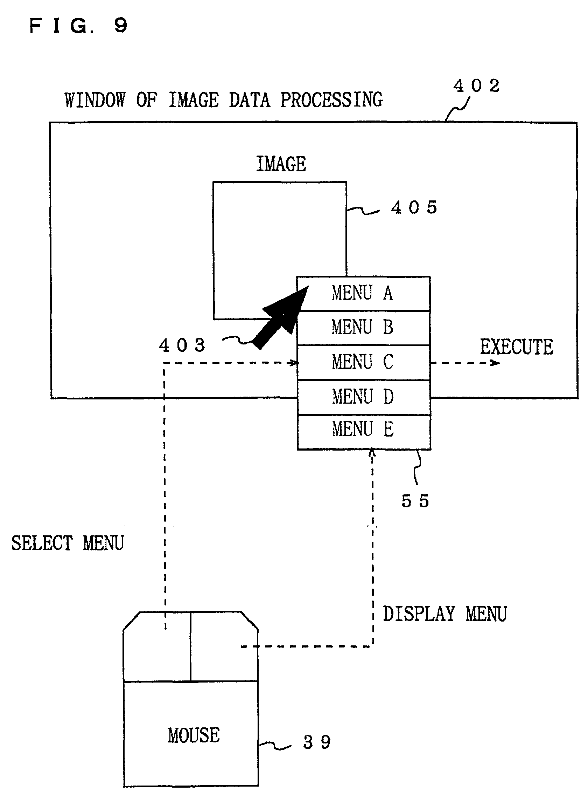

Fig. 9 is an explanatory diagram of a method for accessing a pointer through menu selection. A user operates the mouse 39 (pointing device) and places the pointer 403 on an image 405 supplied on the window 502 of the image data processing. Next, the user clicks a right button of the mouse 39. When an MPU 31 (information processing unit) detects the click, it reads out image related information included in an information image file corresponding to the image 405 (Fig. 8 (b)) from a recording unit 33 in order to create menu display data. That is, a "command name" is extracted as a menu item and a menu 55 is displayed on a display unit 37. Next, the user operates the mouse 39 in order to move the pointer 403 and places it on a menu item to be selected. Then, a left button of the mouse 39 is clicked in order to select and determine one menu item. When the MPU 31 detects the click, it refers to image related information (Fig. 8(b)) and inputs pointer information corresponding to the selected command in the browser 303 in order to access to the pointer. When the MPU 31 receives a file sent from a server based on accessed location, it executes the received file in accordance with an action table corresponding to the command selected at that time. For example, video is replayed by a real player (trademark).

Here, menu items displayed when clicking an image displayed on the window 502 of the image data processing are determined depending on contents of image related information embedded in the information image file. Further, the information image file including image related information is sent from the server device 20. That is, it is characterized that menu items displayed by a mouse click is determined depending on information downloaded from the server device 20.

### (2) Method through Mouse Operation

When a button of the mouse 39 is manipulated and a key of the keyboard 38 are manipulated under a condition that the window 502 of the image data processing is selected, an access to a predetermined information pointer can be done corresponding to the manipulation. When the mouse 39 is operated and the keyboard 38 is operated, the MPU 31 refers to the image related information and refers to the "Assigning Mouse Operation" (Fig. 8(b)) in order to determine whether or not a corresponding operation is defined. When the corresponding operation has been defined, pointer information corresponding to the operation is read out and the pointer is input to the browser 303 in order to access to the corresponding pointer. When the MPU 31 receives a file returned from a server based on an accessed location, the received file is executed in accordance with an action table corresponding to a command name selected at the time. Here, a same mouse operation may be assigned to a plurality of actions.

### [Specific Example of Access to Information Pointer]

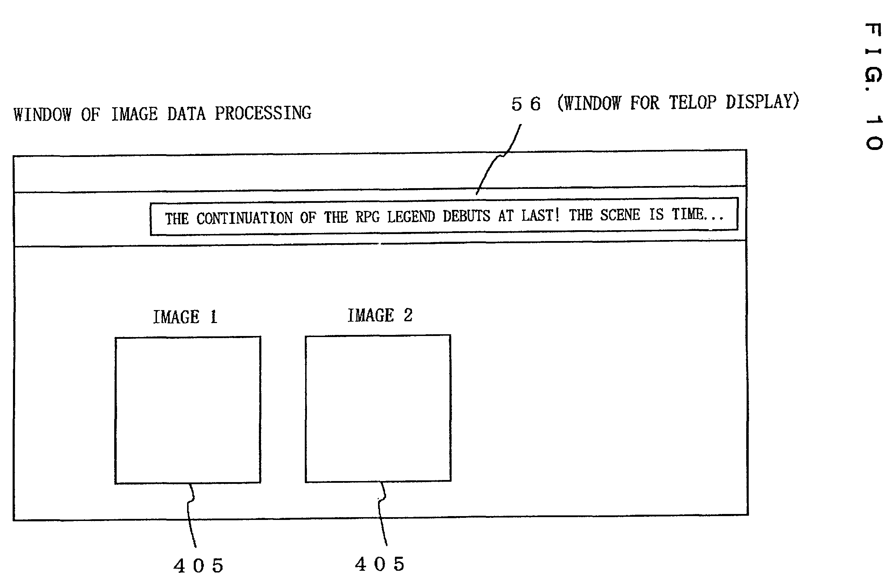

Next, a specific example of an operation when accessing to a pointer for information will be described. Here, an example of "telop display" indicated in the action table in Fig. 8(b) will be described. Fig. 10 is an explanatory diagram of a telop display operation. When a "telop display" is defined in the action table, a pointer in which a text file of a telop is defined for corresponding pointer information, and simultaneous download and storage of information image file into a local disk of the text file and action (control code) of the telop display are defined for the action table. Further, in order to assign a mouse operation, a single click of the left button is defined (the definition above is performed by an information image supplier at the server in general).

When an information image file having the image related information is supplied from the browser 303 to the image data processing 304 in the terminal device 30, the MPU 31 refers to the image related information and starts an access to a pointer defined for "save". Then, a text file of the telop is downloaded from a server corresponding to the pointer and save it in the local HDD 33.

After that, when the user operate the mouse 39 in order to click and select an image displayed on the window 502 of the image data processing, the MPU 31 refers to image related information corresponding to the selected image, and when it determines that the control code defined in the action table is "telop display", a long and narrow window for telop display is displayed within an area (it may be outside of the area) of the image data processing shown in Fig. 10 so that text of the telop read out from the HDD 33 is scroll-displayed in the window. As shown in Fig. 10, when a plurality of images 405 and 405 are supplied, telops each of which is different depending on an image selected by the mouse 39 can be displayed.

### [Supply of Information Image File to Image Data Processing]

In the above-described embodiment, it has been described that the information image file can be supplied to the image data processing by performing a drag and drop action from the browser to the window 502 of the image data processing. Here, another supply method will be described.

### (1) Drag and Drop from Menu

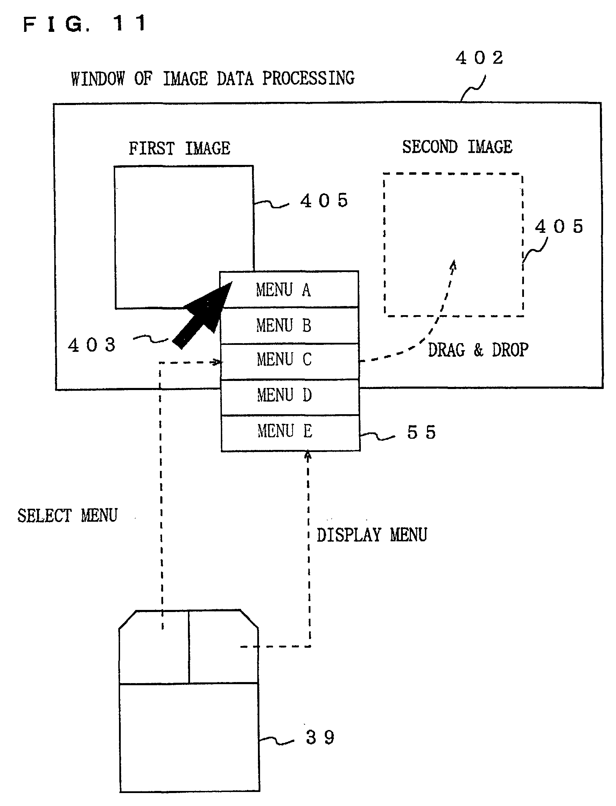

Fig. 11 is an explanatory diagram of a drag and drop operation from a menu. As described above, a menu 55 (first managing area) is displayed by a right button click of the mouse 39 in order to select a menu item for information image addition through the mouse 39. For the menu for information image addition, as defined in the last row in Fig. 8(b), a control code in the action table is defined to a control code specifically for image addition in advance. When the user operates the mouse 39 and performs a drag and drop operation on the menu item for information image addition into the window 502 (second managing area) of the image data processing, the MPU 31 detects the operation and refers to the image related information (Fig. 8(b)). Then, the control code in the action table corresponding to the operated menu item is checked, and when it is determined as "Add Image", an access to a corresponding pointer is started. When a new information image file is downloaded from a predetermined server in response to the access, the MPU 31 supplies newly downloaded information image file to the image data processing 305 in the same manner as the processing that MPU 31 supplies information image file from the browser 303 to image data processing 304.

It produces merit that a browser does not need to be activated each time for supplying a new information image file.

Of course, the menu item for information image addition may be clicked by the mouse 39 simply in order to download the new information image file and supply it to the image data processing 304.

Further, the new information image file may be stored within another information image file which has been supplied already. In this case, when the menu item for information image addition (first managing area) is dragged and dropped, for example, the MPU 31 does not access to a server on a network but refers to image related information of an information image file which is a current subject, reads out another information image file registered in advance therein, and supplies it to the image data processing 304 (second managing area).

In this case, there is an effect that it is not necessary to connect to a server on a network each time for supplying a new information image file.

### (2) Drag-and-Drop from Mail Software

An information image file may be supplied to the image data processing 304 by dragging and dropping an information image file attached to mail software to the window 502 of the image data processing. A viewing window for a mail body or a check window for an attached file will be a first managing area. In this case, since the information image file is transported by placing it on an e-mail in order to be available for a receiver, information can be spread widely and effectively.

### (3) Drag-and-Drop from Arbitrary Folder

An information image file copied in a predetermined folder once from a browser or mail software may be supplied by dragging and dropping it from a corresponding folder (first managing area) to the window 502 (second managing area) of the image data processing. The MPU 31 detects the drag-and-drop operation from an arbitrary folder to the window 502 of the image data processing and supplies an information image file to the image data processing 304 in the same manner as the above-described drag-and-drop processing from the browser.

### (4) Non-Drag-and-Drop Supply method

An information image file can be supplied to the image data processing 304 even by replacing the above-described drag-and-drop operation by other operation. For example, the MPU 31 may detect that an information image file managed outside of the image data processing 304 is clicked in order to supply the information image file to the image data processing 304. Further, when the information image file managed outside of the image data processing 304 is copied on a clip board and then it is pasted from the clip board onto the window 502 of the image data processing, the MPU 31 may detect the operation and supply the information image file to the image data processing.

### (5) Supply from Recording Medium Such as CDROM

Further, the information image file may be supplied from a computer readable recording medium such as CDROM. In this case, an information image file displayed on a folder (first managing area) of the CDROM may be supplied to the image data processing 304 (second managing area) through the above-described drag-and-drop operation, a click operation, and a copy-and-paste operation or the like, or an installer may be activated automatically at the start of the CDROM and the installer may supply an information image file recorded on CDROM or the like, to the image data processing 304. Further, when the installer supplies an information image file, the installer may detect an information image file which has already been supplied to the image data processing 304 in order to select an un-supplied information image file only and then supply it to the image data processing 304.

According to this, an information image file can be distributed as a supplement of a magazine, and it can be distributed to general users in order to cause them to use it.

### [Structures of First Managing Area and Second Managing Area]

While, as shown in Fig. 5, a first managing area and a second managing area may be provided by independent windows (process, program), respectively, another embodiment can be implemented. Several embodiments will be described below.

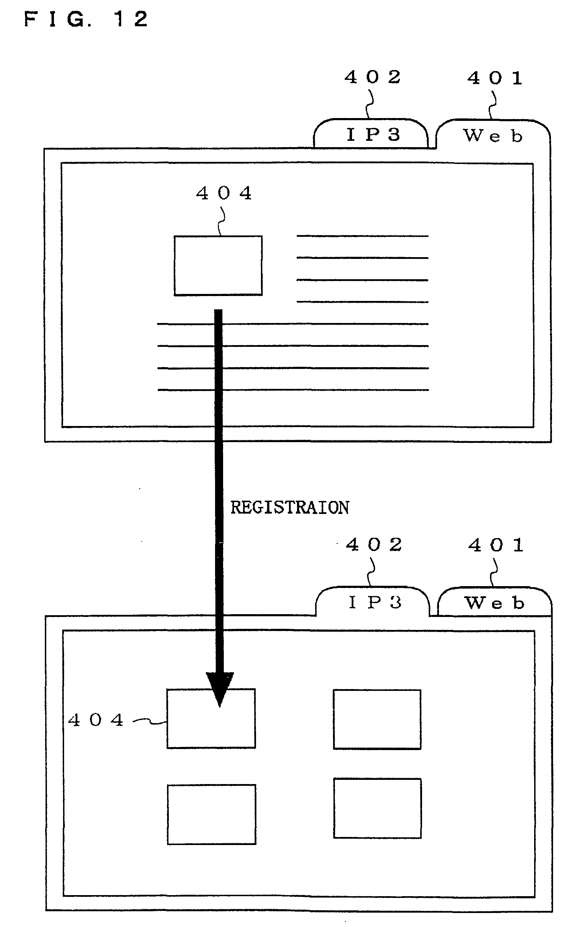

Fig. 12 is an embodiment where a window 501 of a Web browser and a window 502 of image data processing are provided by a single program in order to ask to select a display selection tab at the upper portion of the window through an operation of an input unit 35 and selectively display a window of a selected one. First of all, an information image file 404 displayed on the window of a Web browser is accessed in order to register in the window 502 of the image data processing in the background. As a method for accessing to the information image file 404, the above-described various methods can be adopted. Next, a display selection tab is operated through the input unit 35 in order to display the window 502 of the image data processing. Thus, the information image file having been registered in the image data processing can be accessed.

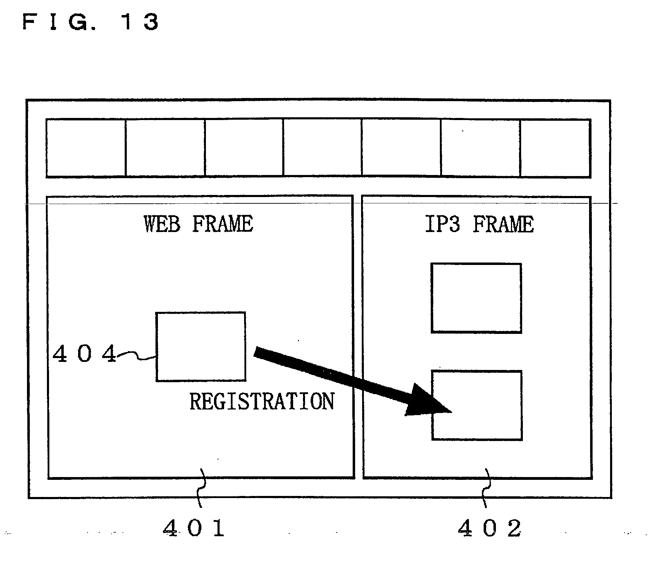

Further, Fig. 13 includes a display window in a frame structure, where one frame is provided as the window of the Web browser and the other frame is provided as the window 502 of the image data processing. In this case, while an access operation is easier that drags and drops the information image file 404 from the frame 401 of the Web browser to the frame of the image data processing, the information image file can be supplied to the image data processing through the above-described other access methods.

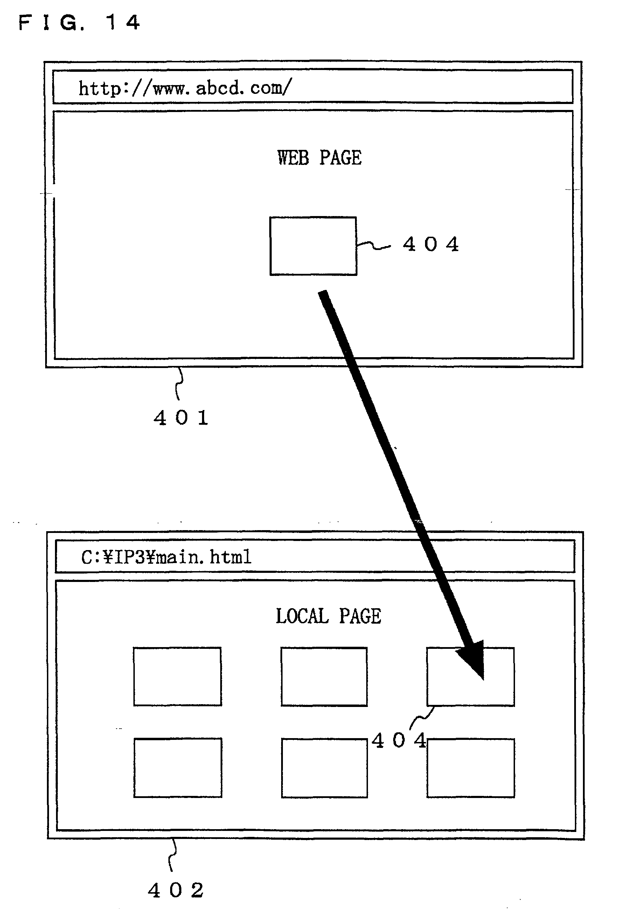

Further, in Fig. 14, when an access is made to the information image file 404 displayed on the window of the Web browser, a processing unit 31 activates a plug-in implemented in advance in the Web Browser. As an access method to the information image file, the above-described various methods can be adopted. The activated plug-in adds management of a new information image file to a local HTML file stored in the storage unit 33 as a second managing area in advance. Then, the local HTML file to which the new information image has been added is expanded on the Web browser as the second managing area 402. When the local HTML file is expanded on the Web browser, it may be expanded on an existing Web browser or may be expanded separately by starting a new Web browser.

### [Encryption of Image Related Information]

Next, encryption processing on image related information added to image data will be described.

### [Encryption Processing in Server Device]

Identification information adding processing 205 of the server device 20 includes a function for encrypting image related information to be added to image data for addition. An encryption algorithm performs update after a predetermined period of time. By encrypting image related information, it can be prevented from that a third party adds, deletes, and modifies image related information illegally in order to use an image file.

### [Decryption processing in Terminal Device]

In the terminal device 30, when referring to the image related information added to image data, the MPU 31 decrypts the image related information. The decryption algorithm is stored in the HDD 33 in advance corresponding to the encryption algorithm, in the server device 20. However, since the encryption algorithm of the server device 20 is updated after a certain period of time, when the encryption algorithm of the server device 20 is updated, it is necessary to update the decryption algorithm of the terminal device 30 so as to be matched with the updated encryption algorithm.

### [Updating Decryption Algorithm]

The server device 20 manages versions of the decryption algorithm stored in the terminal device 30 in database for each ID (IP address, for example) of the corresponding terminal device. When the encryption algorithm of the image related information is updated in the server device 20, Ids of all terminal devices are flagged, and a decryption algorithm corresponding to a new encryption algorithm is sent for update to the flagged one corresponding to the IDs of the corresponding terminal devices among terminal devices accessing to the server device 20 after that. Then, the flags corresponding to the Ids of the terminal devices having been updated are cleared. The decryption algorithm is stored in the HDD 23 of the server device.

The image data processing 304 includes a function for attempting decryption of image related information included in a corresponding information image file when the information image file is supplied and for checking whether or not a data structure of the decrypted image related information is normal. Then, if the decrypted data structure is not normal, it is inhibited to supply the corresponding information image file. It can prevent from supplying an illegally modified information image file. Further, an illegal information image file may be determined based on identification information added to the image data.

### [Billing Processing]

Next, a billing method will be described where an information image file is supplied from a browser to the image data processing 304. When an information image file is supplied from a browser to the image data processing 304, the image data processing 304 accesses to the server device 20 and requests for billing processing in order to perform billing.

An access log (creation log) described in the embodiment of the present invention is created under the condition that an information image file has been supplied from a browser to the image data processing 304 in the terminal device 30. That is, when the information image file is supplied to the image data processing 304, the MPU 31 extracts identification information embedded in the information image file from the supplied information image file, and sends the identification information and a file name of the information image file to the server device 20. The server device 20 associates the received identification information and image file name, an IP address and a host name of an accessing terminal, and access date and time in order to create the above-described creation log (Fig. 4). Thus, the fact that the information image file is supplied to the image data processing in the terminal device 30 is recorded in the access log of the server device 20.

### [Billing Processing (1)]

A first billing method is a method whereby billing is performed on only a first supply of a same information image file by a same terminal (or it may be image data processing 304 having a same user or a same ID) while billing is not performed on second and later supplies. When an information image file is supplied to the image data processing 304, the MPU 31 of the terminal device sends to the server device 20 inherent identification information given to the information image file and a file name of the information image file and suggests billing to the server device 30. The MPU 21 of the server suggested for billing compares the IP address and the host name of the accessing terminal at that time, and the received identification information and image file name with the creation log in order to determine whether or not a same information image file was supplied to the image data processing 304 in a same terminal in the past. As a result, if the same image file is supplied, billing is not performed on the supply at that time. On the other hand, if the same information image file is not supplied to the image data processing 304 in the same terminal, it is billed as a new supply.

### [Billing Processing (2)]

A second billing method is a method according to the first billing method for billing newly when a supply is performed at a different date even if it is a supply of the same information image file in the same terminal. As a usage of the information image file, a usage may be considered whereby a free content service can be received before an expiration date. If a same information image file can be supplied in a same terminal repetitively without billing in this case, the expiration date of the free content service becomes meaningless. Thus, even if a same information image file is supplied in a same terminal, billing is performed when the supply is performed on a different date.

When the information image file is supplied to the image data processing 304, the MPU 31 of the terminal device sends, to the server device 20, inherent identification information given to the information image file and a file name of the information image file and further suggests billing to the server device 30. The MPU 21 of the server device suggested for bulling compares an IP address and a host name of a terminal accessing at that time, and received identification information and image file name with the creation log in order to determine whether or not exactly same data has been registered on a same date. As a result, if it has registered on the same date, no billing is performed. On the other hand, if the same data has not been registered on the same date, billing is performed on supply of the information image file at that time.

### [Billing Method (3)]

In the first and the second billing methods, not a same terminal but a same user may be used for determination. In this case, a user authorization system (function) is provided inside or outside of the server device 20, and when the access from the terminal device 30 to the server device 20 is requested, the user authorization system asks a user to authorize it in order to permit the access to the server device 30 when the user authorization is properly performed. According to this, since a user can be identified, it can be determined whether or not a same information image file was supplied to the image data processing 304 for each user in the past.

Here, a form for embedding image related information in an information image file (icon) may be a package in an icon form as described above or may be a package using Java (trademark) applet, ActiveX (trademark) control, or the like. The Java applet and the ActiveX control are both program units which can be executed by browser software such as Netscape (trademark) and Internet Explore (trademark). Then, The execution code is described by Java medium code for the Java applet, and by the CPU native code for the ActiveX control and can be started for execution by browsers, respectively. Further, both Java applet and ActiveX control can be graphically displayed on display screens of the browsers. When the Java applet or the ActiveX control, for example, is used, an applet only for displaying an image is prepared instead of an icon in which related information is embedded. Furthermore, when an (IMG) tag is used to display the icon on the browser, the applet may be executed by using (EMBED) or (APPLET) tag. Also, embedding related information for both of them is enough when it is executed in a program form.

### Industrial Applicability

According to the present invention, by creating identification information inherent to information an information supply device supplies, adding the created identification information to predetermined image data to be supplied to a terminal, and recording a corresponding relationship between the identification information and the information that the information supply device supplied in advance, information corresponding to the identification information added to the image data can be identified. Thus, the identification information may be used in order to request supply of information corresponding to the identification information.

Therefore, in order to access to information for the identification information in the image data, the image data may be maintained in advance and the image data may be used to instruct an access. Thus, the operability is improved and access to the information can be performed more easily.

In addition, by setting user setting for supply image data and access limitation for the image data as necessary, information can be shared so that joint works can be achieved, which can contribute to the facilitation of sharing.

Still further, by adding operational instruction identification information in advance, an operation for each OS type can be instructed, which makes identical information corresponding to the image data easier to share among multiple OS's.

## Claims

1. An information supply system having a information supply device for supplying information over a network, and a terminal for acquiring information supplied from said information supply device, comprising:
identification information adding means for creating identification information inherent to information that said information supply device supplies and for adding the created identification information to predetermined image data to be supplied to said terminal and further adding, to said predetermined image data, operational instruction identification information for each OS type of said terminal to which said information is supplied; and
identification information recording means for recording a corresponding relationship between identification information added by said identification information adding means and said information that said information supply device supplies.

2. An information supply system according to claim 1 wherein said identification information adding means creates said identification information based on an address of information at least said information supply device supplies.

3. An information supply method for supplying information from an information supply device to a terminal over a network, comprising the steps of:
creating identification information inherent to information that said information supply device supplies;
adding said created identification information to predetermined image data to be supplied to said terminal and further adding, to said predetermined image data, operational instruction identification information for each OS type of said terminal to which said information is supplied; and
recording a corresponding relationship between said added identification information and information that said information supply device supplies.

4. An identification information adding device, comprising:
identification information adding means for creating identification information inherent to information that an information supply device supplied over a network and for adding said created identification information to image data corresponding to information that said information supply device supplies and further adding, to said predetermined image data, operational instruction identification information for each OS type of said terminal to which said information is supplied; and
identification information recording means for recording a corresponding relationship between identification information added by said identification information adding means and information that said information supply device supplies.

5. A computer readable recording medium for recording an identification information adding program for:
creating identification information inherent to information that an information supply device supplies over a network;
adding said created identification information to predetermined image data corresponding to information that said information supply device supplies and further adding, to said predetermined image data, operational instruction identification information for each OS type of said terminal to which said information is supplied; and
recording a corresponding relationship between said added identification information and said information that said information supply device supplies.

6. An information supply device for supplying information to a terminal connected over a network, comprising:
identification information adding means for creating identification information inherent to said supplied information and for adding the created identification information to predetermined image data to be supplied to said terminal and further adding, to said predetermined image data, operational instruction identification information for each OS type of said terminal to which said information is supplied; and
identification information recording means for recording a corresponding relationship between identification information added by said identification information adding means and information supplied to said terminal.

7. A computer readable recording medium for recording a information supply program for, when supplying predetermined image data corresponding to information to be supplied to a terminal connected over a network, comprising:
creating identification information inherent to said information to be supplied;
adding said created identification information to said predetermined image data and further adding, to said predetermined image data, operational instruction identification information for each OS type of said terminal to which said information is supplied; and
recording a corresponding relationship between said added identification information and said information to be supplied.

8. An information using terminal, comprising:
image data acquiring means for acquiring predetermined image data to which identification information inherent to information that an information supply device for supplying information supplies over a network and operational instruction identification information for each OS type of a terminal to which said information is supplied are added;
identification information extracting means for extracting said identification information from image data acquired by said image data acquiring means; and
means for adding said operational instruction identification information in advance so as to instruct an operation for each OS type of said terminal to which said information is supplied.

9. An information using terminal according to claim 8 further comprising information acquiring means for acquiring information corresponding to said identification information from said information supply device depending on identification information extracted by said extraction means.

10. A computer readable recording medium for recording an information using program for:
acquiring predetermined image data to which identification information inherent to information that an information supply device for supplying information supplies over a network and operational instruction identification information for each OS type of a terminal to which said information is supplied are added;
extracting said identification information from said acquired image data; and
adding said operational instruction identification information in advance so as to instruct an operation for each OS type of said terminal to which said information is supplied.
